# EUROPEAN PATENT APPLICATION

(11) **EP 1 993 044 A1**
(43) Date of publication of application: **19.11.2008**
(21) Application number: 07009786.0
(22) Date of filing: 16.05.2007
(51) Int. Cl.: G06F 17/30, G06Q 10/00, G06Q 40/00

(54) **Method for detecting data events by a data processing system**

(30) Priority: 14.05.2007 EP 07009606
(71) Applicant: Dieckmann, Markus, 67433 Neustadt/Weinstrasse (DE)
(72) Inventor: Dieckmann, Markus, 67433 Neustadt/Weinstrasse (DE)
(74) Representative: Russ, Hanns Holger

(57) **Abstract**

A Method for detecting data events by a data processing system (108) in a frequently updated database (102), preferably having stored financial data, is disclosed. The frequently updated database (102) comprising data values of parameters. The data events are defined by patterns, each of the patterns comprising at least one data event rule, preferably which can be interpreted as business rules, for at least one value of at least one of the parameters. A list of parameters and/or data event rules is provided by a Pattern Manager Module (104) of the data processing system to be assembled to the patterns by a user (107) as user owned patterns and the user owned patterns are stored in a preferably proprietary database (103) by the data processing system. The method further is comprising the following steps
- updating the data values of parameters of the frequently updated database (102) by a Data Feed Manager Module (101) of the data processing system,
- automatically starting an automatic pattern checking process, performed preferably immediately after the database has been updated, by checking at least one of the user owned patterns stored in the preferably proprietary database (103) whether the data event rules of these checked patterns are complying with the data values of the parameters stored in the frequently updated database (102) by a Rule Engine Module (105) of the data processing system,
- if all data event rules of a checked pattern are complying, reporting this pattern to the user (107) who owns this pattern as a detected data event by a reporting module (110) of the data processing system.

## Description

### Background of the invention

The invention relates to a method for detecting data events by a data processing system In a frequently updated database, preferably having stored financial data, the frequently updated database comprising data values of parameters, wherein the data events are defined by patterns, each of the patterns comprising at least one data event rule, preferably which can be interpreted as business rules, for at least one value of at least one of the parameters.

To access a database it is well known to present a search mask to users of the data processing system, which is comprising a list of parameters and/or data event rules as patterns to be searched for. To search for data events, meaning to search for data stored in the database which is matching to the patterns, the patterns are checked whether the data event rules of these checked patterns are complying with the data values of the parameters stored in the frequently updated database by the data processing system and if all data event rules of a checked pattern are complying, this pattern is reported to the user as a detected data event (pattern match) by the data processing system.
For example a pattern for searching a critical situation in a chemical plant, wherein data values of frequently measured process parameters, such as water temperature in a cooling system, are stored in the database, can be defined as comprising two data event rules, e.g. the first rule being defined as water temperature is exceeding one hundred degrees and the second rule being defined by a number of a special measuring point in a defined part of the plant. If this pattern is matching to the data values stored in the database, this data event is reported to a user as the stored temperature at the respective measuring point.

According to known methods for Detecting Data Events by a Data Processing System there are fixed patterns and the pattern searching process has to be started by a user of the system himself. Therefore the known methods are not very flexible and user friendly. Usually the methods are implemented to solve a specific problem in a fixed system.

Respective methods can be used in general for financial data processing. In particular, a respective system, meaning a data processing system or a respective computer program run on a data processing system, can be used for automated search and visualisation of user-defined patterns in financial data.

Since most of the persons who act as a professional or semi-professional trader in the financial markets, do not have enough time to analyse a fractional amount of available information, there exists a need for a system and method for automated search and visualisation of user-defined patterns in financial data.

It is known in the art, to provide the user of financial applications with a broad range of financial information and analytical functions, but it is very difficult and time-consuming to execute all analytical tasks, and to combine the results into a useful advantage. As is well understood, it requires considerable effort to execute this work every day.
Persons who act as a trader or investor in the financial markets are permanently looking for patterns in the data of financial instruments, which indicate a promising trading opportunity.
Therefore there exits a need for a system and method for automated search and visualisation of user-defined patterns in financial data, without the requirement to manually execute a large number of analytical tasks every day.

### Object of the invention

It is the object of the invention to introduce a method for Detecting Data Events by a Data Processing System, wherein the disadvantages of known methods are avoided, in particular which can be implemented as a computer program to automatically detect various data events in a frequently updated database.

### Short description of the invention

This object is achieved by the method according to claim 1. Further advantageous features of the invention are defined in the depending claims.

According to the inventive method, automatic detecting of data events by a data processing system in a frequently updated database, preferably having stored financial data, is performed. The frequently updated database is comprising data values of parameters. The data events are defined by patterns, each of the patterns comprising at least one data event rule, preferably which can be interpreted as business rule, for at least one value of at least one of the parameters. So those data event rules are belonging to the respective pattern. According to the inventive method a list of parameters and/or data event rules is provided by a Pattern Manager Module of the data processing system to be assembled to the patterns by a user as user owned patterns and the user owned patterns are stored in a preferably proprietary database by the data processing system. The inventive method is comprising the following steps:
- updating the data values of parameters of the frequently updated database by a Data Feed Manager Module of the data processing system,
- automatically starting an automatic pattern checking process (pattern searching), performed preferably immediately after the database has been updated, by checking at least one of the user owned patterns stored in the proprietary database whether the data event rules of these checked patterns are complying with the data values of the parameters stored in the frequently updated database by a Rule Engine Module of the data processing system,
- if all data event rules of a checked pattern are complying, reporting this pattern match to the user who owns this pattern as a detected data event by a reporting module of the data processing system.
   The key idea of the invention is to enable a user of a data processing system to assemble patterns to be checked from predefined data event rules, to store the assembled patterns and to check the patterns automatically after the data values of parameters stored in a frequently updated database have changed automatically, leading to the advantage that no surveillance of frequently changing data values is to be done by the user himself.
   Advantageously, at least one of the data event rules is comprising a calculation algorithm to calculate a resulting value from preferably more than one data value of the parameters stored in the frequently updated database and the pattern checking process is comprising the step of calculating the resulting value from these data values, wherein the respective data event rule is assessed as to be complying with the data values of the parameters stored in the frequently updated database if the resulting value is complying with the respective data event rule. Therefore, a post-processing, defined by the calculation algorithm, of different data values can be included into the pattern checking process.
   Preferably, means for defining triggering data values for the parameters and/or data event rules of the assembled user owned patterns by the user are provided by the Pattern Manager Module of the data processing system and the defined triggering data values are stored in the preferably proprietary database together with the user owned patterns, leading to the possibility to customise the data event rules for the user. Furthermore advantageously the list of parameters and/or data event rules is comprising imaging information for graphically displaying detected data events to a user by a Visualisation Engine Module of the reporting module. Therefore, the design of the graphically displaying can be implemented easily.
   Very advantageously, the automatically starting of the automatic pattern checking process and the pattern checking process are comprising the steps of
- handing over information which of the parameters of the frequently updated database have been updated from the Data Feed Manager Module to the Rule Engine Module, preferably by sending a data event message from the Data Feed Manager Module to the Rule Engine Module, wherein the data event message is comprising the said information,
- retrieving the data event rules which are related to the updated parameters by the Rule Engine Module as related data event rules,
- checking which of the related data event rules comply with the data values of the parameters stored in the frequently updated database by the Rule Engine Module,
- determining the patterns to which the complying data event rules are belonging by the Rule Engine Module, and
- checking the remaining data event rules of the determined patterns by the Rule Engine Module whether they are complying with the data values of the parameters stored in the frequently updated database.

Specifically, the data event rules which are related to the updated parameters are those data event rules which are comprising at least one of the updated parameters. If there is just a single updated parameter, meaning the data value of the parameter in the database has been updated, the related data events are those which are comprising this parameter. In general in this context the expression "related" can be understood as: the data event rule defines a relation between a parameter value stored in the frequently updated database and a triggering value and/or a data value of another parameter stored in the frequently updated database.
Accordingly, the number of rule checks while the automatic pattern checking process is performed can be decreased significantly, because patterns which are not comprising a related data event rule need not to be checked, i.e. are not checked. Obviously, after one data event rule of a specific pattern has been found as not complying with the data values of the parameters stored in the frequently updated database, the checking process of the respective pattern can be stopped, because this pattern obviously cannot match to the data values of the parameters currently stored in the frequently updated database.

In another preferred variant of the inventive method the related data event rules are sorted by the data processing system, wherein identical data event rules are only checked once whether they are complying with the data values of the parameters stored in the frequently updated database, preferably wherein Hash Values of triggering data values of the related data event rules are calculated and only those of the related data event rules comprising triggering data values leading to different Hash Values are checked.
Because each data value change of the parameters in the frequently updated database can typically activate thousands of related data event rules it is very important to reduce the number of rule checks by avoiding to check identical data event rules redundantly. Each data event rule is characterised by at least one triggering data value, used in at least one logical expression to check whether the respective data event rule triggers, meaning whether the data event rule is complying with the data values of the parameters stored in the frequently updated database. By calculating a Hash Value over all triggering data values of a data event rule, identical data event rules can be detected and have to be checked only once.

Preferably, the retrieving of the related data event rules is carried out by receiving a list of the related data event rules from the Pattern Manager Module by the Rule Engine Module and/or the determining of the patterns to which the complying data event rules belong is carried out by receiving a list of the patterns from the Pattern Manager Module by the Rule Engine Module. As the Pattern Manager Module is comprising the information which parameters belong to which data event rule and which data event rules belong to which pattern, the respective list can be created by the Pattern Manager Module without time consuming search processes. No parsing of the pattern and the data event rules is necessary.

If the data values of the parameters stored in the frequently updated database, which are complying with a detected data event, are stored together with the detected data event defining pattern in a pattern match database by the data processing system to be reported to the user who owns the defining pattern by the reporting module, the detected data event can be analysed by a user anytime after the respective data event has occurred by accessing the stored information in the pattern match database.

A particularly preferred variant of the inventive method is characterized in that the Data Feed Manager Module receives the values of the parameters of the database to be updated in different data formats (financial raw data) and reformats the received values into a common data format before updating the values of the parameters of the frequently updated database. Therefore, a huge amount of different data sources can be used to update the information stored as data values in the frequently updated database.

In another preferred variant of the inventive method, the data values of at least one of the parameters of the frequently updated database are subdivided into data domains and means for defining and/or assigning the data domains to patterns while assembling the patterns by the users who own the respective patterns are provided. The data domains are defined by sets of data values, e.g. representing financial instruments as specific stock indices. Therefore, only data values which are related to elements of a specific data domain have to be used to check a respective pattern to which the respective data domain has been assigned.

Also within the scope of the invention is a computer program comprising means for performing the inventive method or one of its variants when run on a computer system. The computer program may be saved on a data storage medium, such as a floppy disc, a hard disc drive, a compact disc, a DVD or a USB stick.

Within this invention, the term "module" can be understood as a software module and/or a task run on a computer or at least as means being prepared to perform the corresponding step described as to be performed by the respective module.

### Preferred variants of the invention

As a preferred variant of the inventive method the method is implemented in a system for automated search and visualisation of user-defined patterns in financial data. Of course, the inventive method can be used for detecting data events of any kind in any kind of data, for example, to find critical situations in measured data values of parameters in an industrial plant. Within the further description the term "system" can be understood as a software system, a computer program or the data processing system whereon the software or the computer program is run. The system which can be deployed on one or more application servers is able to receive and process financial raw data, meaning data values of parameters of the database to be updated in different formats, from external data sources. A data feed manager module, which acts as external data interface, receives the financial raw data and converts its formats in such a way, that other components of the system can further use and process the data, i.e. into a specific data format of the database. The formatted raw data is stored inside a financial database. Users of the system can define their own patterns from a set of predefined business rules as data event rules. A pattern manager module component stores the pattern definitions in association with the developing user (developer), meaning the user who has assembled the pattern. It is also possible to utilise predefined patterns from other users if the respective patterns have been made public by the developer. At least one of the patterns is checked by a rule engine module every time the system receives new financial data, i.e. every time the database is updated. The rule engine module preferably uses a method to increase the performance to check a large number of pattern definitions according to one of the preferred embodiments of the inventive method. If a pattern match as a detected data event is detected, the rule engine module stores a pattern match record In a database, which comprises the data values of the parameters stored in the frequently updated database which are complying with a detected data event. The user who owns the respective pattern receives a notification on any pattern match and may execute an appropriate action accordingly. To display pattern matches in a graphical way, the user can access a visualisation engine module, which is able to superimpose the data of pattern matches into the price chart of the underlying financial instrument. To test and improve his pattern definitions, the user can execute a back testing algorithm based on the internal financial database.

The system and method in accordance with the invention can be part of an internet or intranet web application as known in the art, to make the method available to any number of users.

Persons who act as traders in the financial markets can subscribe to a system according to the invention as users to define their own trading patterns from a large set of predefined business rules to be supervised by the system and therefore detect promising trading opportunities automatically.

Further advantages can be extracted from the description and the enclosed drawings. The features mentioned above and below can be used in accordance with the invention either individually or collectively in any combination. The embodiments mentioned are not to be understood as exhaustive enumeration but rather have exemplary character for the

### description of the invention.

### Drawings and detailed description of the invention

Further features and advantages of the present invention will become apparent from the following detailed description, taken in combination with the appended drawings, in which:
- Fig. 1: is showing a schematic diagram that exposes a system and method for automated search and visualisation of user-defined patterns in financial data according to the invention;

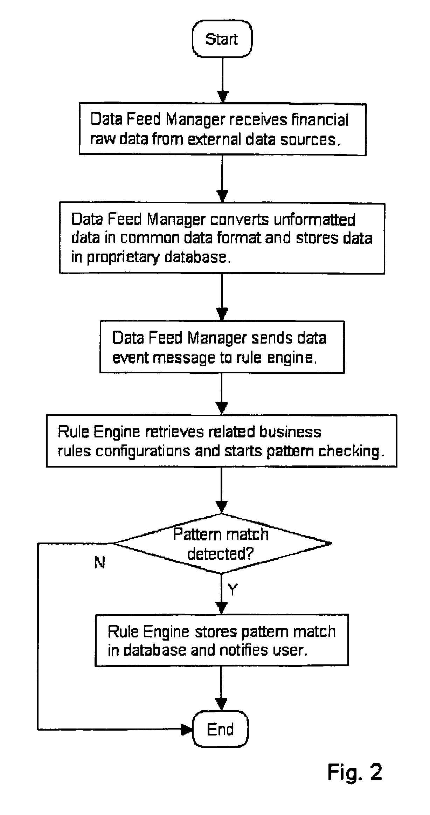

- Fig. 2: is showing a flow diagram of steps performed by the system shown in Fig. 1 to check user-defined patterns in financial data accordance to the invention;
- Fig. 3: is showing a flow diagram of steps performed by the system shown in Fig. 1 to assemble user-defined patterns used to detect data events in financial data in accordance with the invention;
- Fig. 4: is showing a flow diagram of steps performed by the rule engine module shown in Fig. 1 to perform pattern checking in accordance with the invention;
- Fig. 5: is showing a schematic diagram that exposes the structure of data objects used to define user-defined patterns in accordance with the invention.

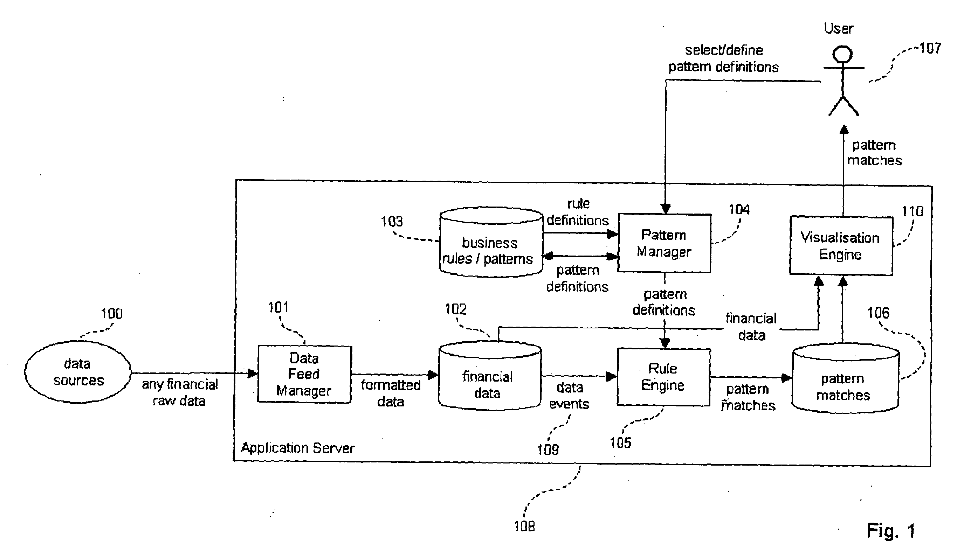

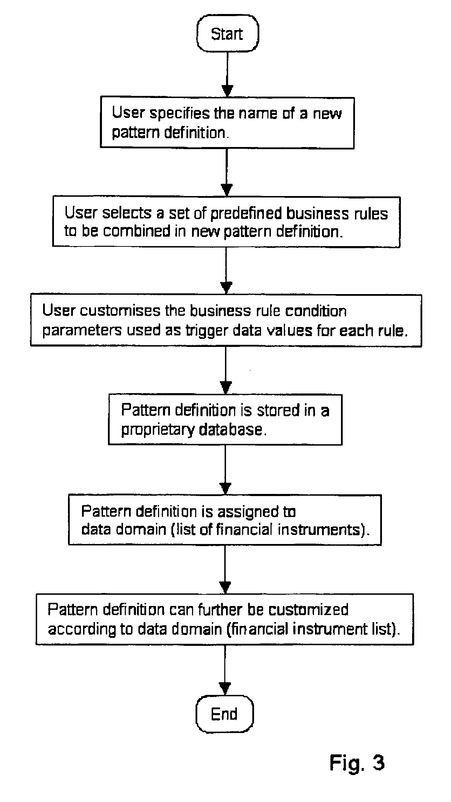

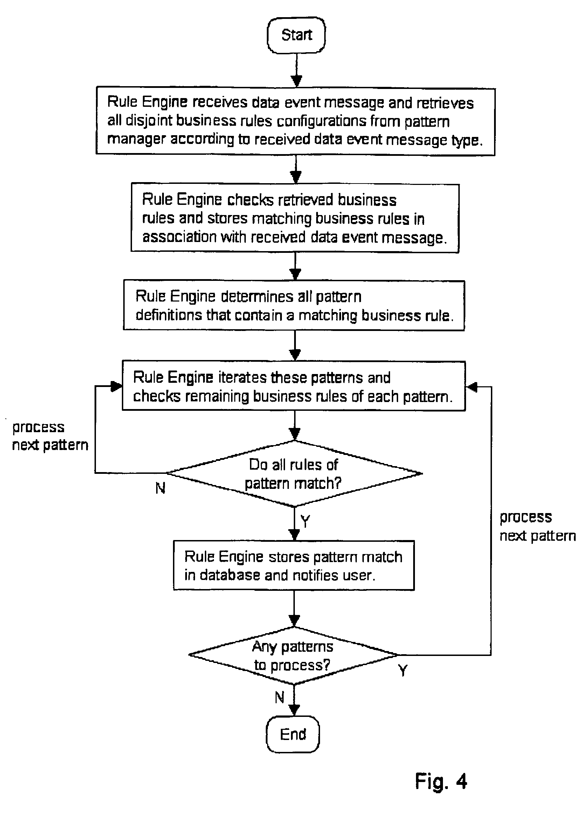

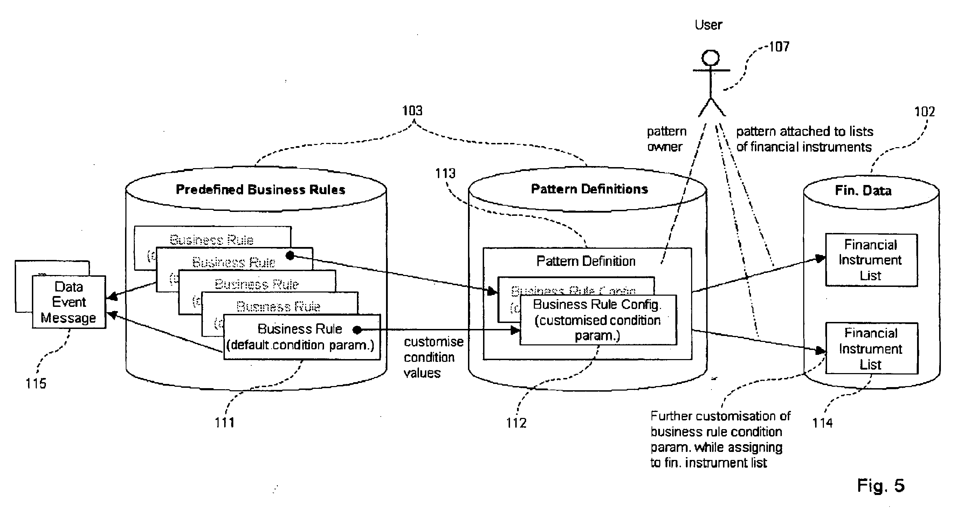

The invention as illustrated in figure 1 relates to the use of the inventive system and method for automated search and visualisation of user-defined patterns in financial data. In accordance with one aspect of the invention, there is shown a system and method for automated search and visualisation of user-defined patterns 113 in financial data, comprising receiving and processing of arbitrary financial data to be stored in a proprietary database; assembling user-defined patterns 113 from predefined business rules 111 used to analyse the pre-processed financial data and to determine pattern matches; and making available these pattern matches to registered users in a graphical way.
The system and method for automated search and visualisation of user-defined patterns in financial data is comprising at least one service provider wherein users can assemble their own pattern definitions from a set of predefined business rules, and every user is able to customize the triggering data values, meaning condition parameters, of pattern definitions, and wherein a rule engine module performs the pattern checking process according to the inventive method to check pattern definitions against incoming financial data, meaning the updated data values of parameters in the frequently updated database.
The inventive system is comprising a data feed manager module that receives financial raw data from several attached data sources, and reformats this data to be used by other components of the system; a pattern manager module enables the user to define patterns from predefined business rules to be searched in the financial data of the database; the rule engine module checks at least one of the defined, meaning the assembled, patterns according to incoming financial data in real-time, meaning immediately after the frequently updated database has been updated, and stores pattern matches in a database immediately to be made available to the related user.
Fig. 1 shows a schematic diagram of one embodiment of the inventive system that provides a method for automated search and visualisation of user-defined patterns in financial data according to the invention. The system, in accordance with the invention, includes a data feed manager module 101 which is responsible for receiving incoming financial raw data and reformatting the raw data into a common data format (pre-processing) and storing the data in the frequently updated database 102 (financial database). It further sends a data event message to the rule engine module 105 after the pre-processing has been finished.
The pattern manager module 104 enables the users 107 of the system 108 to assemble (customise) patterns from a set of predefined business rules which are stored in a database 103 as exposed in Fig. 3. A pattern definition can consist of one or more business rules with individual business rule configurations. Default values for triggering data values of each business rule configuration are stored within the pattern definition. Each pattern definition can be attached to any list of financial instruments 114, also referred to as data domain, defined in the financial database 102 and can further be customized independently from the default configuration while attached to different financial instrument lists, as shown in Fig. 5. Therefore a particular pattern definition can be used in multiple data domains with different business rule configurations. The financial instruments 114 are defined as sets of data values for specific parameters. The respective parameters, for example, may describe the name of a stock, or in case of an industrial plant the name of a part of the plant. Therefore, the attachment of a pattern to a data domain leads to a specific data event rule, comprising a statement like "data value of a specific parameter being equal to one of the data values of the set of data values of the respective data domain", as part of the respective pattern.
The system as shown, in accordance with the invention, is comprising a rule engine module 105 which analyses the financial data according to the pattern definitions stored in the pattern database 103, meaning the rule engine module 105 performs the automatic pattern checking process. The rule engine module is triggered by a data event message, sent from the data feed manager 101 or financial database 102. When the rule engine module receives a data event message, it retrieves all related pattern definitions via the pattern manager module 104 and starts the pattern search process, as shown in Fig. 4. If a pattern match is detected, the rule engine stores a related record in the pattern matches database 106. The user can be notified immediately on every pattern match or periodically about determined pattern matches.

In accordance with the invention, the rule engine uses a pattern checking algorithm exposed in Fig. 4 to reduce the number of rule checking cycles, and thus to improve significantly the performance of the entire real-time pattern searching process. Instead of checking every business rule configuration that is part of a pattern definition, the rule engine first determines a list of disjoint business rule configurations, which are related to the incoming data event message, meaning which are related to the just updated parameters. Possibly, there exist many business rule configurations with equal triggering data values in the pattern definitions of different users.
If the rule engine determines a business rule match, it further determines all belonging pattern definitions and starts checking all unchecked business rule configurations of these patterns. If all business rules of a particular pattern definition are matching with the current state of financial data, a pattern match is detected.

In accordance with the invention, the pattern manager module 104 uses a hashing algorithm across the customised triggering data values of a business rule configuration, to determine equal business rule configurations, and therefore can reduce the number of rule checks in the case that a data event occurs. This leads to significant performance improvements, if large numbers of business rule configurations have to be checked.

According to the invention, pattern matches are stored in the pattern match database 106 and can be visualised to the user in a graphical way, by the visualisation engine module as part of a reporting module 110. Each pattern match record contains the related pattern definition with all customised triggering data values and the financial data that has caused the pattern match. A selection of these parameters can be superimposed into the price chart of the related financial instrument to visualise the pattern match.

The inventive system which is comprising several modules, can be deployed on one or more application servers 108 and is able to receive and process financial raw data of different types from external data sources 100.

The data feed manager module 101 acts as an external data interface, receives the data and converts it Into a common format so that other components of the system can further use and process the data. The reformatted raw data is stored inside a financial database 102 as the frequently updated database.

Users 107 of the system are enabled to use preferably a web-based user interface of the pattern manager module 104 to define their own patterns which are stored in the patterns database 103 in association with the defining user as owner of the respective pattern. Each pattern definition 113 is comprising a set of predefined business rules 111. At least some of them having triggering data values which can be customised to the concerns of the particular user. A customised business rule is also referred to as business rule configuration 112. A pattern definition therefore consists of several business rule configurations. For example, a business rule may be defined as: price greater than one dollar. The triggering data value "one dollar' can be predefined as a default value. The said business rule may be customised by defining the triggering data value as "ten dollars", leading to the business rule configuration "price greater than ten dollars". In general, a data event rule is comprising at least one logical operation as "greater than", "lower than", "equal to" etc. , at least one parameter and one triggering data value or another parameter. The logical operation concatenates one parameter with another parameter or the triggering data value in a mathematical way.

Each pattern definition can be attached to any list of financial instruments 114, also referred to as data domain, defined in the financial database 102 and can further be customized independently from the default configuration while attached to different financial instrument lists. As an example a data domain may consist of all stocks which are listed in a specific stock index. Therefore a respective pattern definition can be used in multiple data domains with different business rule configurations. It also may be possible to utilise predefined patterns from other users if these have been made public by the developer. To test and improve pattern definitions, the user can be enabled to execute a back testing algorithm based on the internal financial database 102.

The core of the inventive system is the rule engine module 105 which is used to detect data events in the financial data stored in the frequently updated database, defined according to the pattern definitions of the users. The rule engine advantageously uses a method to select the business rules to be checked and to increase the performance to check large numbers of pattern definitions. Each business rule relates to at least one specific data event message 115, forwarded to the rule engine module 105 by the financial database 102 as part of the data feed manager module 101, meaning each data event rule is related to the information of the data event message which of the parameters of the database have been updated recently.
Arbitrary business rules can relate to a single data event. Every time the rule engine receives a data event message, it determines the related business rules and further retrieves all disjoint business rule configurations from the pattern manager module 104. Disjoint means that equal business rule configurations are only retrieved once.

The rule engine module 105 then iterates the business rule configurations and checks the triggering data values against the corresponding values of the data event as shown in Fig. 4. If a matching business rule configuration is detected, it is stored in association with the received data event message.
In the next step the rule engine module 105 determines all pattern definitions that contain a matching business rule configuration. These pattern definitions are candidates to check their remaining business rule configurations to evaluate whether the pattern is fulfilled. The rule engine module 105 iterates all these pattern definitions and checks the remaining business rule configurations of each pattern. If all remaining business rule configurations of a single pattern definition are matching, the rule engine module 105 stores a pattern match record in the pattern matches database 106. A pattern match record is comprising all data values calculated during the business rule checks and further references to the underlying business rule configurations comprising all triggering data values. So the pattern match record is comprising information why a particular pattern match has occurred. The reporting module, which, for example, can be part of the rule engine module, further notifies the user 107, who is the owner of the respective pattern definition, by e-mail or SMS. A user 107 of the system could review any pattern match by displaying it in a graphical form by the inventive system. The visualisation engine module 110 is able to superimpose all data of a pattern match into the charts of the underlying financial data.

Business rules are implemented as small parts of software and each business rule consists of a module that performs the condition check and another module to visualise the results. During the condition check the business rule sometimes uses the data values of the data event message to calculate resulting values which are compared against the triggering data values of the business rule configuration. The visualisation part of the business rule is able to annotate charts of the underlying financial data with triggering data values of the business rule configuration and the values from the processed data event message.

The following example will explain the graphical behaviour of business rules used in a pattern called "sudden price breakout". The pattern consists of two business rules: "daily volume" and "price gapping up".
It is assumed that the condition of the first business rule is the daily trading volume of a stock which has to be 100% above the moving average of the last 10 days to be fulfilled. A quote event of a stock is received, comprising the daily volume which is 120% above the value of the moving average of the last 10 days, so this rule is fulfilled. Further it is assumed that the price is gapping up 3,5%, wherein as in the business rule configuration the triggering data value has a value of 3%. So the second rule is also fulfilled and a pattern match is stored in the database.
The visualisation engine module uses the visualisation part of the business rules to superimpose the values of the condition checks into the price/volume chart of the stock. The system draws a line at the +100% triggering data value of the moving average volume according to the "daily volume" business rule and annotates the latest volume bar with the +120% matching value stored in the pattern match record.
According to the "price gapping up" business rule the system draws a +3% triggering data value line above the quote of the previous day and annotates the price of today with the matching value of +3,5%. This drawing is carried out in the price chart of the stock. Both business rules annotate the corresponding charts with a special symbol to indicate a business rule match.

Summing up, the following advantages can be achieved by the inventive method or system, as the method is used to analyse financial data:
- real-time rule checking based on financial data events;
- real-time analysis of any kind of financial data, not only prices;
- combination of multiple rules of different data domains to define patterns;
- graphical visualization of pattern matches;
- configuration of business rules and their triggering data values in natural language;
- visualization of business report data together with the price chart;
- visualization of data events (essential parameters) that forced the pattern match;
- visualization of price chart after pattern matches;
- the system only has to be initialised with an investment strategy (patterns) to be informed about upcoming data events;
- no daily research or software operation required;
- no software installation required;
- accessible from everywhere in the world by a web browser;

To achieve this advantages a system according to the invention features the following characteristics:
The method for automated search and visualisation of user-defined patterns in financial data implemented by the system, comprises the steps of: receiving and processing of unformatted financial data to be converted and stored in a frequently updated database and used for pattern searching; assembling user-defined patterns from a large set of predefined business rules used to analyse financial data and to determine pattern matches; and displaying pattern matches preferably in graphical way to the users who have defined or customised the respective patterns.
Preferably according to the method the system enables a user to assemble user-defined patterns by combining one or more predefined business rules from any data domain into a new pattern definition and adapting the triggering data values of each rule to personal needs. Preferably, the system enables the user to carry out the business rule configuration in natural language.
Preferably, the system enables the user to attach the pattern definitions to any set of financial instruments and further to customise the triggering data values of each business rule configuration for each attachment.
Preferably, the system enables the user to make public the pattern definitions by the creating user, to be used by other users, by adapting the business rule configurations and attaching the pattern to any list of financial instruments.
According to the inventive method, the pattern checking mechanism is preferably activated every time, whenever financial data is received and has been pre-processed by the system.

According to the inventive method, the number of rule checks preferably is reduced by determining a sorted set of disjoint business rule configurations according to the type of incoming financial data.
Preferably, a user is notified about detected pattern matches immediately or at predefined times.
Preferably, detected pattern matches can be visualised to the user in a graphical way by the system, by illustrating details of the pattern definition and the triggering financial data within any graphical representation of financial instrument data.
Preferably the user is enabled to test and improve pattern definitions by using historical data stored in the internal financial database 102.
The system for automated search and visualisation of user-defined patterns in financial data is comprising a data feed manager module 101 that is responsible for receiving incoming financial raw data, reformatting the raw data into a common data format and storing the data in a frequently updated database 102.
The data feed manager 101 sends a data events message to the rule engine module 105 immediately after the pre-processing of financial raw data has been finished.
The system is further comprising a pattern manager module 104 to be used by the users 107 to define customised search patterns from a set of predefined business rules which are stored in a database 103.
The system preferably is further comprising a database 103 to store pattern definitions that can consist of one or more business rules with individual business rule configurations and where each pattern definition can be attached to any list of financial instruments defined in the financial database 102.
The system preferably further is comprising means for a customisation of pattern definitions while attaching the pattern to several sets of financial instruments, leading to the possibility to use a pattern definition in multiple situations with adapted rule parameters.
Preferably, the rule engine module 105 is triggered by financial data event messages sent from the data feed manager module 101, then retrieves all pattern definitions that contain a related business rule via the pattern manager module 104 and then starts the pattern search process.

The rule engine module 105 preferably stores pattern matches in a database 106, notifies the associated users and makes the pattern matches available to the users in a graphical way.

The system is further comprising a visualisation engine module 110 being designed to display pattern matches in a graphical way, by superimposing pattern definition and pattern match data into any chart of financial instrument raw data.

## Claims

1. Method for detecting data events by a data processing system (108) in a frequently updated database (102), preferably having stored financial data, the frequently updated database (102) comprising data values of parameters, wherein the data events are defined by patterns, each of the patterns comprising at least one data event rule, preferably which can be interpreted as business rules, for at least one value of at least one of the parameters,
wherein a list of parameters and/or data event rules is provided by a Pattern Manager Module (104) of the data processing system to be assembled to the patterns by a user (107) as user owned patterns and the user owned patterns are stored in a preferably proprietary database (103) by the data processing system,
comprising the following steps
- updating the data values of parameters of the frequently updated database (102) by a Data Feed Manager Module (101) of the data processing system,
- automatically starting an automatic pattern checking process, performed preferably immediately after the database has been updated, by checking at least one of the user owned patterns stored in the preferably proprietary database (103) whether the data event rules of these checked patterns are complying with the data values of the parameters stored in the frequently updated database (102) by a Rule Engine Module (105) of the data processing system,
- If all data event rules of a checked pattern are complying, reporting this pattern to the user (107) who owns this pattern as a detected data event by a reporting module (110) of the data processing system.

2. Method according to claim 1, **characterised in that**
at least one of the data event rules is comprising a calculation algorithm to calculate a resulting value from preferably more than one data value of the parameters stored in the frequently updated database and the pattern checking process is comprising the step of calculating the resulting value from these data values, wherein the respective data event rule is assessed as to be complying with the data values of the parameters stored in the frequently updated database if the resulting value is complying with the respective data event rule.

3. Method according to one of the claims 1 to 2, **characterised in that**
means for defining triggering data values for the parameters and/or data event rules of the assembled user owned patterns by the user are provided by the Pattern Manager Module of the data processing system and the defined triggering data values are stored in the proprietary database together with the user owned patterns and/or
the list of parameters and/or data event rules is comprising imaging information for graphically displaying detected data events to a user by a Visualisation Engine Module of the reporting module.

4. Method according to one of the claims 1 to 3, **characterised in that**
the automatically starting of the automatic pattern checking process and the pattern checking process are comprising the steps of
- handing over information which of the parameters of the database have been updated from the Data Feed Manager Module to the Rule Engine Module, preferably by sending a data event message from the Data Feed Manager Module to the Rule Engine Module, wherein the data event message is comprising the said information,
- retrieving the data event rules which are related to the updated parameters by the Rule Engine Module as related data event rules,
- checking which of the related data event rules comply with the data values of the parameters stored in the frequently updated database by the Rule Engine Module,
- determining the patterns to which the complying data event rules are belonging by the Rule Engine Module, and
- checking the remaining data event rules of the determined patterns by the Rule Engine Module whether they are complying with the data values of the parameters stored in the frequently updated database.

5. Method according to claim 4, **characterised in that**
the related data event rules are sorted by the data processing system, wherein identical data event rules are only checked once whether they are complying with the data values of the parameters stored in the frequently updated database, preferably
wherein Hash Values of triggering data values of the related data event rules are calculated and only those of the related data event rules comprising triggering data values leading to different Hash Values are checked.

6. Method according to one of the claims 4 to 5, **characterised in that**
the retrieving of the related data event rules is carried out by receiving a list of the related data event rules from the Pattern Manager Module by the Rule Engine Module and/or the determining of the patterns to which the complying data event rules belong is carried out by receiving a list of the patterns from the Pattern Manager Module by the Rule Engine Module.

7. Method according to one of the claims 1 to 6, **characterised in that**
the data values of the parameters stored in the frequently updated database which are complying with a detected data event are stored together with the detected data event defining pattern in a pattern match database (106) by the data processing system to be reported to the user who owns the defining pattern by the reporting module.

8. Method according to one of the claims 1 to 7, **characterised in that**
the Data Feed Manager Module (101) receives the values of the parameters of the database to be updated in different data formats and reformats the received values into a single data format before updating the values of the parameters of the frequently updated database.

9. Method according to one of the claims 1 to 8, **characterised in that**
the values of at least one of the parameters of the frequently updated database are subdivided into data domains and that means for defining and/or assigning the data domains to patterns while assembling the patterns by the users who own the respective patterns are provided.

10. Computer program comprising means for performing the method of one of the claims 1 to 9 when run and/or stored on a computer system.
